# EUROPÄISCHE PATENTSCHRIFT

(11) **EP 1 752 110 B1**
(45) Veröffentlichungstag und Bekanntmachung des Hinweises auf die Patenterteilung: **16.11.2011**
(21) Anmeldenummer: 06016800.2
(22) Anmeldetag: 11.08.2006
(51) Int. Cl.: A61C 17/08

(54) **Adapter für eine dentale Saugeinrichtung**
Adapter for a dental suction device
Adaptateur pour un système d'aspiration dentaire

(30) Priorität: 13.08.2005 DE 102005038636
(43) Veröffentlichungstag der Anmeldung: 14.02.2007
(73) Patentinhaber: Dürr Dental AG, 74321 Bietigheim-Bissingen (DE)
(72) Erfinder: Nonnenmacher, Eberhard, 74379 Ingersheim (DE)
(74) Vertreter: Ostertag, Reinhard

(56) Entgegenhaltungen:
- EP-A1- 0 457 220
- DE-U1- 8 030 146
- US-A- 3 881 254
- US-A- 4 083 115

## Beschreibung

Die Erfindung betrifft einen Adapter für eine dentale Saugeinrichtung gemäß dem Oberbegriff des Anspruches 1.

Adapter werden oft verwendet, um Leitungen unterschiedlichen Durchmessers oder unterschiedlichen Materiales miteinander zu verbinden.

Typische dentale Saugeinrichtungen, die an einem dentalen Arbeitsplatz dazu verwendet werden, Speichel, Wasser und bei der dentalen Behandlung anfallende Partikel aus dem Munde eines Patienten abzusaugen, umfassen in der Regel einen flexiblen Schlauch, der mit einer Ablage des Arbeitsplatzes verbunden ist, die ihrerseits mit der Saugmaschine der Praxis verbunden ist, und eine Saugkanüle, die mit dem freien Ende des Saugschlauches verbunden ist.

Derartige Saugeinrichtungen halten den Mund des Patienten von Flüssigkeit frei und erlauben dem Zahnarzt einen guten Zugang zu den zu behandelnden Stellen des Gebisses sowie eine gute Sicht zum Behandlungsort.

Aus hygienischen Gründen werden die Saugkanülen nach jeder Behandlung ausgewechselt.

Bei gesteigerten Anforderungen an die Hygiene ist auch daran zu denken, daß der Saugschlauch, der zwischen den Behandlungen am Arbeitsplatz verbleibt, durch das bei einer vorhergehenden Behandlung abgesaugte Gemisch kontaminiert ist. Die Saugschläuche werden aber nur in der Regel einmal pro Tag desinfiziert. Bei Unterbrechung des Saugluftstromes könnte daher aus dem Inneren des Saugschlauches kontaminierte Flüssigkeit unter Schwerkrafteinwirkung zur Saugkanüle zurückfließen.

Die EP 0 457 220 A1 zeigt einen Adaptergriff für Saugkanülen, der einen steuerbaren Nebenluftkanal aufweist. Durch Öffnen und Schließen des Nebenluftkanals kann die Saugkraft an einer Saugöffnung der Saugkanäle variiert werden.

Durch die vorliegende Erfindung soll ein Adapter angegeben werden, der ein Zurückfließen von Flüssigkeit aus dem Saugschlauch in die Saugkanüle verhindert und leicht zu desinfizieren ist.

Diese Aufgabe ist erfingdungsgemäß durch einen Adapter mit den Merkmalen des Anspruchs 1 gelöst.

Durch die Nebenluft-Kanalanordnung wird ständig Luft durch den Saugschlauch hindurchgesaugt, auch wenn die Saugkanüle an ihrem freien Ende kurzfristig verschlossen ist, sich z. B. an weichem Gewebe dicht festsaugt. Unter diesen Umständen sorgt dann der über das Adapterstück in den Schlauch eintretende Nebenluftstrom dafür, dass im schlauch befindliche Flüssigkeitvolumina nicht unter Schwerkraft in die Saugkanüle zurückfließen können, von wo sie in den Mund des Patienten austreten könnten.

Trotz der Nebenluft- Kanalanordnung ist der Adapter leicht zu desinfizieren, da die Flächen der Nebenluft-Kanalanordnung nach dem Trennen der beiden Adapterteile für Desinfektionsmittel frei zugänglich sind.

Vorteilhafte Weiterbildungen der Erfindung sind in Unteransprüchen angegeben.

Mit der Weiterbildung der Erfindung gemäß Anspruch 2 wird erreicht, daß der Nebenluftatrom alle Wandabechnitte des Saugschlauches in gleicher weise überströmt, also rotationssymmetrisch ist.

Die Weiterbildung der Erfindung gemäß Anspruch 3 erfolgt auf einfache Weise eine Drosselung des Nebenluftatromes.

Dieser beeinträchtigt somit das normale Arbeiten mit der Sugkanüle nicht.

Gemäß dem Vorschlag von Anspruch 4 kann man die drosselnden Nebenluftkanäle mit geringen Querschnitten ausbilden, wobei trotzdem gewährleistet ist, daß die Wandflächen der Nebenluftkanäle einwandfrei desinfiziert werden können. Die von einander getrennten Adapterteile haben keine Bereiche, die hinterschnitten oder versteckt wären und von Desinfektionsflüssigkeit schlecht erreicht werden.

Gleiches gilt für Anspruch 5.

Dabei ist die Weiterbildung der Erfindung gemäß Anspruch 6 wieder im Hinblick auf eine symmetrische Nebenluftbeaufschlagung des Ansaugschlauches von Vorteil.

Mit der Weiterbildung der Erfindung gemäß Anspruch 7 wird erreicht, daß der Adapter zum Reinigen leicht in seine Adapterteile zerlegt werden kann, ohne daß hierfür Werkzeuge notwendig wären. Rastverbindungen lassen sich auch leicht beim Spritzen aus Kunststoff gefertigter Adapterteile ohne nennenswerte Mehrkosten änformen.

Eine Rastverbindung, wie sie im Anspruch 8 angegeben ist, baut besonders kompakt und ist einfach zu bedienen.

Mit der Weiterbildung der Erfindung gemäß Anspruch 9 wird erreicht, daß die Rastverbindung zwischen den beiden Adapterteilen beim Öffnen einer mechanischen Reihe geschalteten weiteren Rastverbindung zu der Saugkanüle nicht geöffnet wird. Dies ist im Hinblick auf ein einfaches Austauschen der Saugkanülen während einer Behandlung von Vorteil.

Auch die Weiterbildung der Erfindung gemäß Anspruch 10 erleichtert das Abnehmen und auch das Aufsetzen der Saugkanüle. Darüber hinaus ist auch das Festhalten des der Saugkanüle benachbarten Adapterteiles beim Trennen der Adapterteile erleichert.

Nachstehend wird die Erfindung anhand eines Ausführungsbeispieles unter Bezugnahme auf die Zeichnung näher erläutert. In dieser zeigen:
- Fig. 1: eine schematische Darstellung einer dentalen Saugeinrichtung;
- Fig. 2: einen axialen Schnitt durch einen Saugkanülen-Adapter der in Fig. 1 gezeigten Saugeinrichtung; und
- Fig. 3: eine vergrößerte perspektivische Ansicht eines schlauchseitigen Adapterteiles des in Fig. 2 gezeigten Adapters.

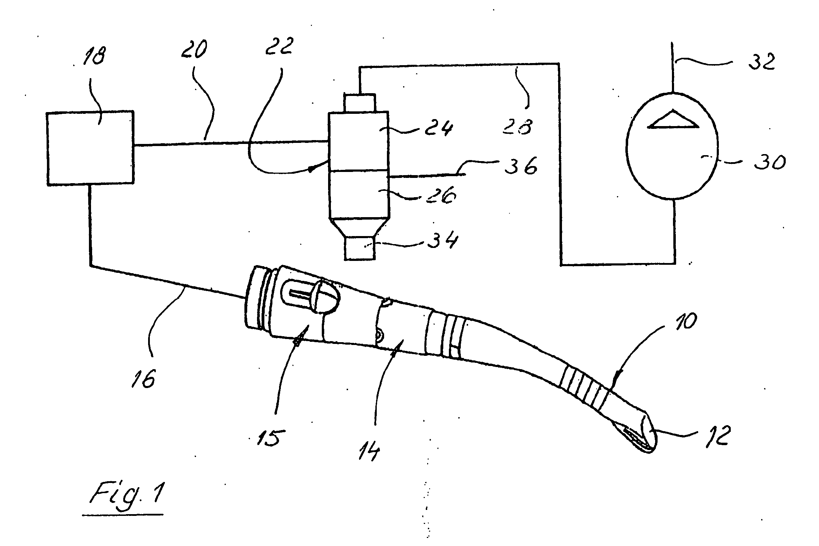

In Fig. 1 ist durch gestrichelte Linien bei 10 insgesamt eine Saugkanüle gezeigt, welche eine Saugöffnung 12 aufweist. Die Saugkanüle 10 ist über einen insgesamt mit 14 bezeichneten Adapter und ein Durchsatz-Steuerteil 15 mit einem flexiblem Schlauch 16 verbunden, der zu einer Ablage 18 führt. Die Ablage 18 dient zum Halten des Schlauches 16, wenn dieser nicht zum Arbeiten benötigt wird, sowie weiterer Hilfsgeräte, die der Zahnarzt beim Arbeiten von Zeit zu Zeit benötigt, wie z. B. eine Wasserlanze oder dergleichen. Diese Einzelheiten der Ablage 18 sind hier nicht von Interesse und daher in der Zeichnung nicht dargestellt.

Die Ablage 18 ist über eine Leitung 20 mit einer Abscheideeinheit 22 verbunden, die aus einem Zyklon 24 und einer darunter angeordneten Zentrifuge 26 besteht.

Der Zyklon 24 trennt von dem einströmenden Gemisch aus Luft, Flüssigkeit und Festpartikeln die Luft ab und stellt diese auf einer Reinluftleitung 28 bereit, die mit der Ansaugseite einer Saugmaschine 30 verbunden ist. Letztere gibt die Luft über eine Auslaßleitung 32, die in der Praxis über Dach geführt ist, an die Umgebung ab.

Die Zentrifuge 26 trennt von dem vom Zyklon 24 erhaltenen Gemisch aus Flüssigkeit und Feststoffpartikeln die Feststoffpartikel ab und sammelt diese in einem in regelmässigen Abständen geleerten Sammelbehälter 34. Das von Feststoffpartikeln befreite Wasser wird auf einer Reinwasserleitung 36 bereitgestellt, die mit dem öffentlichen Kanalnetz (nicht gezeigt) verbunden ist.

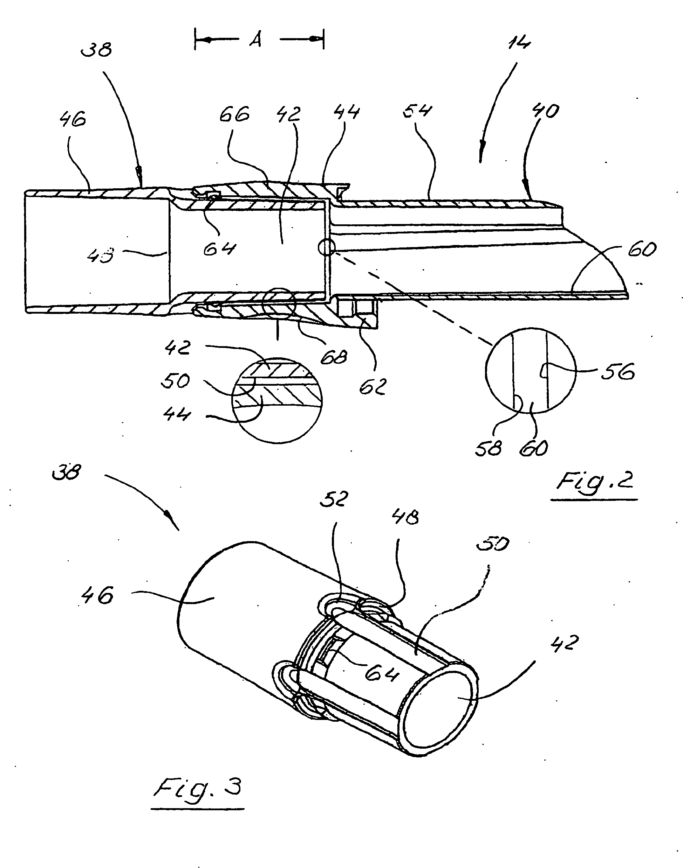

Nachstehend wird nun unter Bezugnahme auf die Figuren 2 und 3 der Adapter 14 näher beschrieben. Er besteht aus einem schlauchseitigen Adapterteil 38 und einem kanülenseitigen Adapterteil 40. Diese überlappen sich über einen in Fig. 2 mit A bezeichneten axialen Bereich, wobei ein innenliegender Stutzenabschnitt 42 des schlauchseitigen Adapterteiles 38 von einem Hülsenabschnitt 44 des kanülenseitigen Adapterteiles 40 umgeben ist. Der radiale Grundabstand zwischen dem Stutzenabschnitt 42 und dem Hülsenabschnitt 44 ist gerade so groß, daß die beiden Adapterteile ohne nennenswerte Reibung ineinandergesteckt werden können.

Der Stutzenabschnitt 42 des Adapterteiles 38 ist mit einem etwas größeren Durchmesser aufweisenden Koppelabschnitt 46 verbunden. An der Übergangsstelle erhält man eine Schulter 48.

In dem Stutzenabschnitt 42 sind vier in Umfangsrichtung gleich verteilte flache Nebenluftkanäle 50 vorgesehen, die in der Praxis eine Tiefe von etwa 0,5 bis etwa 1,0 mm aufweisen können.

Die nutenförmigen Nebenluftkanäle 50 setzen sich in den Koppelabschnitt 46 fort und enden in rampenförmigen Umlenkflächen 52.

Der Hülsenabschnitt 44 des Adapterteiles 40 trägt einen rohrförmigen Koppelabschnitt 54 kleineren Durchmessers, auf welchen die Saugkanüle 10 aufschiebbar ist. An der Übergangsstelle zwischen dem Hülsenabschnitt 44 und dem Koppelabschnitt 54 erhält man eine Schulter 56.

Wie aus Fig. 2, insbesondere der dortigen Ausschnittvergrößerung ersichtlich, ist eine freie Endfläche 58 des Stutzenabschnittes 42 um eine kleine Strecke von der Fläche der Schulter 56 entfernt, so daß man zwischen diesen beiden Flächen einen in Umfangsrichtung verlaufenden radialen Spalt 60 erhält. Dieser steht über die Nebenluftkanäle 50 und die Umlenkflächen 52 mit der Umgebung in Strömungsverbindung.

In Fig. 2 ist bei 62 noch eine Rastschürze 62 vorgesehen, die in der Nachbarschaft des Überganges zwischen Hülsenabschnitt 44 und Koppelabschnitt 54 vorgesehen ist und mit einer komplementär ausgebildeten Rastrippe (nicht gezeigt) zusammenarbeitet, die beim hinteren Ende der Saugkanüle 10 vorgesehen ist. Die Rastschürze 62 ist durch in der Zeichnung nicht sichtbare axiale Schlitze in einzelne Federfinger unterteilt, und ihre Rastrippe hat an beiden axialen Enden Rampen, so daß man die Saugkanüle 10 durch Ziehen vom Adapter 14 ablösen kann und durch axiales Drücken auf diesem verrasten kann.

Eine ähnliche Rastverbindung ist zwischen den beiden Adapterteilen 38 und 40 vorgesehen. Sie umfaßt vier in Umfangsrichtung gleich verteilte dachförmige Rasthöcker 64 des Adapterteiles 38 sowie mit diesen zusammenarbeitende axiale Rastfinger 66 des Hülsenabschnittes 44, die durch eine Mehrzahl in Umfangsrichtung verteilter axialer Schlitze des Hülsenabschnittes 44 begrenzt sind. Die Rastfinger 66 haben, wie in Fig. 2 ersichtlich, auf ihrer Innenseite Rastnuten, die mit den Rasthöckern 64 formschlüssig zusammenarbeiten können.

Auf seiner Außenfläche weist der Hülsenabschnitt 44 vier in Umfangsrichtung verteilte Eindrückungen 68 auf, die als Greifhilfen dienen, um das Adapterteil 40 sicher zu halten, wenn entweder die Saugkanüle 10 abgezogen werden soll oder die Rastverbindung zwischen den beiden Adapterteilen 38, 40 aufgebrochen werden soll.

Aus der oben gegebenen Beschreibung ist ersichtlich, daß der Adapter 14 insgesamt einen Nebenluftkanal bereitstellt, der zum Inneren des Schlauches 16 führt und immer offen ist. Über diesen Nebenluftkanal wird aber nur eine beschränkte Luftmenge angesaugt, da er verglichen mit der Saugkanüle 10 großen Strömungswiderstand aufweist. Der Strömungswiderstand des Nebenluftkanales ist aber andererseits so bemessen, daß bei am Ende verschlossener Saugkanüle 10 soviel Luft über den Nebenluftkanal ins Innere des Schlauches 16 gesaugt wird, daß auf der Innenfläche des Schlauches befindliche Flüssigkeit daran gehindert wird, unter Schwerkrafteinfluß in Richtung auf die Saugkanüle 10 zu fließen.

Die Einleitung der Nebenluft in den Schlauch 16 erfolgt in Umfangsrichtung gleichförmig, da die Nebenluftzufuhr über den rotationssymmetrischen Spalt 60 erfolgt, der zwischen der Endfläche 58 und der Schulter 56 liegt.

Dadurch, daß der Spalt 62 über mehrere in Umfangsrichtung verteilte Nebenluftkanäle 50 und geneigte Einlaßabschnitte derselben (Umlenkflächen 52) mit der Umgebung in Verbindung steht, ist gewährleistet, daß ein Nebenluftstrom auch dann nicht unterbunden ist, wenn die Assistentin des Zahnarztes einen oder zwei der Einlaßabschnitte der Nebenluftkanäle 50 mit ihrem Finger verschließt.

Die Drosselung der Nebenluft durch geringen Querschnitt aufweisende Kanäle führt zu keinem hygienischen Risiko, da diese Kanäle durch Flächen begrenzt sind, die auf der Außenfläche des Stutzenabschnittes 42 und der Innenfläche des Hülsenabschnittes 44 ausgebildet sind. Diese Flächen sind nach Trennen der beiden Adapterteile 38, 40 für Desinfektionsmittel frei zugänglich.

Der in der Praxis aus Kunststoff gespritzte Adapter 14 läßt sich somit nach Öffnen der Rastverbindung zwischen den Adapterteilen 38, 40 in Teilen problemlos und sicher desinfizieren oder sterilisieren.

## Patentansprüche

1. Adapter für eine dentale Saugeinrichtung mit einem
schlauchseitigen Adapterteil (38), das einen mit einem Saugschlauch (16) verbindbaren ersten Anachlussabschnitt (46) aufweist, mit einem kanülenseitigen Adapterteil (40), das einen mit einer Saugkanüle (10) verbindbaren zweiten Anschlussabschnitt (54) aufweist und mit einer Nebenluft-Kanalanordnung, **dadurch gekennzeichnet, daß** ein innenliegender Stutzenabschnitt (42) des schlauchseitigen Adapterteiles (38) von einem Hülsenabschnitt (44) des kanülenseitigen Adapterteils (40) umgeben ist und die Nebenluft-Kanalanordnung (50, 60) durch Flächen begrenzt ist, die auf der Außenfläche des innenliegenden Stutzenabschnittes (42) und der Innenfläche des Hülsenabschnittes (44) ausgebildet sind, so daß die Flächen nach dem Trennen der beiden Adapterteile (38, 40) für Desinfektionsmittel frei zugänglich sind.

2. Adapter nach Anspruch 1, **dadurch gekennzeichnet, daß** die Nebenluft-Kanalanordnung (50, 60) einen mit einem ersten Anschlussabschnitt (46) in Verbindung stehenden Ringspalt (60) aufweist.

3. Adapter nach Anspruch 2, **dadurch gekennzeichnet, daß** die Nebenluft-Kanalanordnung (50, 60) mindestens einen axialen Kanal (50) aufweist, der zu dem Ringspalt (60) führt.

4. Adapter nach Anspruch 3, **dadurch gekennzeichnet, daß** der axiale Kanal (50) durch die Außenfläche des innenliegenden Stutzenabschnitts (42) und die Innenfläche des äußeren Hülsenabschnitts (44) begrenzt ist.

5. Adapter nach Anepruch 4, **dadurch gekennzeichnet, daß** die Außenfläche des innenliegenden Stutzenabschnitts (42) oder die Innenfläche des äußeren Hülsenabechnitts (44) mit mindestens einem flachen nutförmigen Nebenluftkanal (50) mit axialer Erstreckungskomponente versehen ist und der äußere Hülsenabschnitt (44) den innenliegenden Stutzenabschnitt mit verglichen mit der Tiefe des Nebenluftkanales (50) geringem Abstand umgibt.

6. Adapter nach Anspruch 3, **dadurch gekennzeichnet, daß** auf der Außenfläche des innenliegenden Stutzenabschnitts (42) bzw. der Innenfläche des äußeren Hülaenabschnitts (44) mehrere in Umfangsrichtung gleich verteilte Nebenluftkanäle (50) vorgesehen sind.

7. Adapter nach einem der Ansprüche 4 bis 6, **dadurch gekennzeichnet, daß** die beiden Adapterteile (38, 40) über eine Rastverbindung (64, 66) lösbar verbunden sind.

8. Adapter nach Anspruch 7, **dadurch gekennzeichnet, daß** die Rastverbindung eine Erhebungsanordnung (64) auf dem einen Adapterteil (38) und eine Federfingeranordnung (66) auf dem anderen Adapterteil (40) aufweist.

9. Adapter nach Anspruch 7 oder 8, **dadurch gekennzeichnet, daß** die zum öffnen der Rastverbindung (64, 66) zwischen den beiden Adapterteilen (38, 40) benötigte Kraft größer ist als die zum öffnen einer weiteren Rastverbindung (62, -) benötigte Kraft, welche zwischen dem kanülenseitigen Adapterteil (40) und der Saugkanäle (10) vorgesehen ist.

10. Adapter nach einem der Ansprüche 4 bis 9, **dadurch gekennzeichnet, daß** das kanülenseitige Adapterteil (40) auf seiner Außenfläche mit Greifhilfen (68) versehen ist.

## Claims

1. Adapter for a dental suction apparatus having an adapter part (38) on the hose side which has a first connecting section (46) that can be connected to a suction hose (16); having an adapter part (40) on the cannula side which has a second connecting section (54) that can be connected to a suction cannula (10); and having a secondary-air duct arrangement, **characterised in that** an internally located supporting section (42) of the adapter part (38) on the hose side is surrounded by a sleeve section (44) of the adapter part (40) on the cannula side and the secondary-air duct arrangement (50, 60) is bounded by faces which are constructed on the outer face of the internally located supporting section (42) and the inner face of the sleeve section (44), so that the faces are freely accessible to disinfection means after separation of the two adapter parts (38, 40).

2. Adapter according to claim 1, **characterised in that** the secondary-air duct arrangement (50, 60) has an annular gap (60) which is in communication with a first connecting section (46).

3. Adapter according to claim 2, **characterised in that** the secondary-air duct arrangement (50, 60) has at least one axial duct (50) which leads to the annular gap (60).

4. Adapter according to claim 3, **characterised in that** the axial duct (50) is bounded by the outer face of the internally located supporting section (42) and the inner face of the outer sleeve section (44).

5. Adapter according to claim 4, **characterised in that** the outer face of the internally located supporting section (42) or the inner face of the outer sleeve section (44) is provided with at least one flat, groove-shaped secondary-air duct (50) with an axial component of extension, and the outer sleeve section (44) surrounds the internally located supporting section (42) at a. distance which is small compared with the depth of the secondary-air duct (50).

6. Adapter according to claim 3, **characterised in that** a number of secondary-air ducts (50) are provided, equally distributed in the peripheral direction, on the outer face of the internally located supporting section (42) or the inner face of the outer sleeve section (44).

7. Adapter according to one of claims 4 to 6, **characterised in that** the two adapter parts (38, 40) are detachably connected via a snap-in connection (64, 66).

8. Adapter according to claim 7, **characterised in that** the snap-in connection has an elevation arrangement (64) on one adapter part (38) and a spring-finger arrangement (66) on the other adapter part (40).

9. Adapter according to claim 7 or 8, **characterised in that** the force needed to open the snap-in connection (64, 66) between the two adapter parts (38, 40) is greater than the force needed to open a further snap-in connection (62, -) which is provided between the adapter part (40) on the cannula side and the suction cannula (10) .

10. Adapter according to one of claims 4 to 9, **characterised in that** the adapter part (40) on the cannula side is provided with gripping aids (68) on its outer face.

## Revendications

1. Adaptateur destiné à un dispositif d'aspiration dentaire, comprenant une pièce d'adaptation (38) située du côté d'un flexible et munie d'une première région de raccordement (46) pouvant être reliée à un flexible d'aspiration (16), une pièce d'adaptation (40) placée du côté d'une canule et pourvue d'une seconde région de raccordement (54) pouvant être reliée à une canule d'aspiration (10), et un système de canaux à air secondaire, **caractérisé par le fait qu'**une région (42) occupant une position intérieure, formant embout de la pièce d'adaptation (38) située du côté du flexible, est ceinturée par une région (44) formant douille sur la pièce d'adaptation (40) placée du côté de la canule, et le système de canaux (50, 60) à air secondaire est délimité par des surfaces ménagées sur la surface extérieure de ladite région intérieure (42) formant embout, et sur la surface intérieure de ladite région (44) formant douille, de telle sorte que lesdites surfaces soient librement accessibles par des agents de désinfection à l'issue de la séparation des deux pièces d'adaptation (38, 40).

2. Adaptateur selon la revendication 1, **caractérisé par le fait que** le système de canaux (50, 60) à air secondaire présente un interstice annulaire (60), en communication avec une première région de raccordement (46).

3. Adaptateur selon la revendication 2, **caractérisé par le fait que** le système de canaux (50, 60) à air secondaire comporte au moins un canal axial (50) menant à l'interstice annulaire (60).

4. Adaptateur selon la revendication 3, **caractérisé par le fait que** le canal axial (50) est délimité par la surface extérieure de la région intérieure (42) formant embout, et par la surface intérieure de la région extérieure (44) formant douille.

5. Adaptateur selon la revendication 4, **caractérisé par le fait que** la surface extérieure de la région intérieure (42) formant embout, ou la surface intérieure de la région extérieure (44) formant douille, est dotée d'au moins un canal aplati (50) à air secondaire, revêtant la forme d'une rainure et présentant une composante d'étendue axiale, et ladite région extérieure (44) formant douille ceinture ladite région intérieure, formant embout, avec espacement faible comparativement à la profondeur dudit canal (50) à air secondaire.

6. Adaptateur selon la revendication 3, **caractérisé par le fait que** plusieurs canaux (50) à air secondaire, uniformément répartis dans le sens périphérique, sont respectivement prévus sur la surface extérieure de la région intérieure (42) formant embout, ou sur la surface intérieure de la région extérieure (44) formant douille.

7. Adaptateur selon l'une des revendications 4 à 6, **caractérisé par le fait que** les deux pièces d'adaptation (38, 40) sont reliées, de manière libérable, par l'intermédiaire d'une liaison encliquetable (64, 66).

8. Adaptateur selon la revendication 7, **caractérisé par le fait que** la liaison encliquetable comprend un ensemble de protubérances (64), sur l'une (38) des pièces d'adaptation, et en ensemble de mentonnets élastiques (66) sur l'autre pièce d'adaptation (40).

9. Adaptateur selon la revendication 7 ou 8, **caractérisé par le fait que** la force, requise pour l'ouverture de la liaison encliquetable (64, 66) entre les deux pièces d'adaptation (38, 40), est supérieure à la force requise pour l'ouverture d'une liaison encliquetable supplémentaire (62, -) qui est prévue entre la canule d'aspiration (10) et la pièce d'adaptation (40) placée du côté de ladite canule.

10. Adaptateur selon l'une des revendications 4 à 9, **caractérisé par le fait que** la pièce d'adaptation (40), placée du côté de la canule, est munie d'auxiliaires de préhension (68) sur sa surface extérieure.
